# EUROPÄISCHE PATENTSCHRIFT

(11) **EP 3 711 644 B1**
(45) Veröffentlichungstag und Bekanntmachung des Hinweises auf die Patenterteilung: **15.12.2021**
(21) Anmeldenummer: 20160299.2
(22) Anmeldetag: 02.03.2020
(51) Int. Cl.: A47J 31/60

(54) **VERFAHREN ZUM BETRIEB EINES GETRÄNKEAUTOMATEN MIT AUTOMATISCHER REINIGUNGSVORRICHTUNG UND GETRÄNKEAUTOMAT**
METHOD FOR OPERATING A BEVERAGE VENDING MACHINE WITH AUTOMATIC CLEANING DEVICE AND AUTOMATIC BEVERAGE DISPENSER
PROCÉDÉ DE FONCTIONNEMENT D'UN DISTRIBUTEUR AUTOMATIQUE DE BOISSONS POURVU DE DISPOSITIF DE NETTOYAGE AUTOMATIQUE ET DISTRIBUTEUR AUTOMATIQUE DE BOISSONS

(30) Priorität: 20.03.2019 DE 102019107072
(43) Veröffentlichungstag der Anmeldung: 23.09.2020
(73) Patentinhaber: Miele & Cie. KG, 33332 Gütersloh (DE)
(72) Erfinder: Linke, Patrick, 33611 Bielefeld (DE); Morbach, Andreas, 33334 Gütersloh (DE)

(56) Entgegenhaltungen:
- EP-A1- 2 823 737
- EP-A1- 3 192 411

## Beschreibung

Die Erfindung betrifft ein Verfahren zum Betreiben eines Getränkeautomaten zur Zubereitung von Aufgussgetränken, umfassend
- ein Strömungsleitungssystem mit einer Ventilanordnung;
- eine Reinigungsvorrichtung zur automatischen Durchführung eines Reinigungs- und/oder Pflegevorgangs, umfassend eine Vorratskartusche zur Bevorratung von Reinigungsmittel, und
- als elektrischen Verbraucher eine elektrisch angetriebene Pumpe zur Zuführung des Reinigungsmittel oder einer Reinigungslösung von der Reinigungsvorrichtung in das Strömungsleitungssystem;
- eine Steuereinrichtung,
wobei mittels der Steuereinrichtung die Aktivierung und Deaktivierung der Ventilanordnung und der Pumpe zur Durchführung der Getränkezubereitung und des Reinigungs- oder Pflegevorgangs erfolgt.

Ein Getränkeautomat mit einer Reinigungsvorrichtung ist beispielsweise aus der DE 10 2011 081 010 A1 bekannt. Hierbei ist in der Kartusche, die von der Geräteaußenseite her zugänglich ist, eine Pumpe integriert, die von einem geräteseitigen Antrieb angesteuert wird. Hierbei handelt es sich um eine Dosierpumpe, mit der eine vorbestimmte Menge an Reinigerkonzentrat aus der Kartusche in das Strömungsleitungssystem eingelassen wird. Nachteilig hierbei werden in regelmäßigen oder unregelmäßigen zeitlichen Abständen automatisch ablaufende Reinigungsvorgänge für das Strömungsleitungssystem durchgeführt. Insgesamt wird eine Reinigung, also das Ablösen von groben Anhaftungen oder Schmutz, der Leitungen und Funktionskomponenten erreicht.

Die EP 2 823 737 A1 offenbart ein Verfahren zum Betreiben eines Getränkeautomaten zur Zubereitung von Aufgussgetränken, umfassend ein Strömungsleitungssystem mit einer Ventilanordnung; eine Reinigungsvorrichtung zur automatischen Durchführung eines Reinigungs- und/oder Pflegevorgangs, umfassend eine Vorratskartusche zur Bevorratung von Reinigungsmittel und als elektrischen Verbraucher eine elektrisch angetriebene Pumpe zur Zuführung einer Reinigungslösung von der Reinigungsvorrichtung in das Strömungsleitungssystem; eine Steuereinrichtung, wobei mittels der Steuereinrichtung die Aktivierung und Deaktivierung der Ventilanordnung und der Pumpe zur Durchführung der Getränkezubereitung und des Reinigungs- oder Pflegevorgangs erfolgt, wobei die Steuereinrichtung die durchgeführte Nutzung des Getränkeautomaten erfasst und davon abhängig einen Verschmutzungsindex generiert.

Hierbei kann es jedoch vorkommen, dass der Reinigungsvorgang stets mit der gleichen Intensität aktiviert wird, was zu einem erhöhten Verbrauch an Reinigungsmittel führt. Dies ist insbesondere nachteilig, wenn Getränkebezüge erfolgen, die eine geringe Verunreinigung in den Leitungen verursachen. Ferner kann es vorkommen, dass eine erhöhte Anzahl an Getränken zubereitet wurde, die eine erhöhte Verunreinigung verursachen. In diesem Fall ist es notwendig, die Reinigungsabläufe zu intensivieren oder häufiger zu aktivieren. Insgesamt wird dem Benutzer hier eine große Verantwortung aufgetragen, der er sich in der Regel gar nicht bewusst ist.

Der Erfindung liegt somit die Aufgabe zu Grunde, die Effektivität hinsichtlich der Wartungsabläufe bzw. den Betrieb für Wartungsabläufe in einem Getränkeautomaten zu erhöhen oder zu verbessern bzw. einen Getränkebereiter mit einer effektiven Reinigungsvorrichtung bereitzustellen.

Erfindungsgemäß wird unter anderem diese Aufgabe durch ein Verfahren mit den Merkmalen des unabhängigen Anspruchs 1 und durch einen Getränkeautomaten gemäß dem unabhängigen Anspruch 9 gelöst. Vorteilhafte Ausgestaltungen und Weiterbildungen der Erfindung ergeben sich aus den jeweils abhängigen Ansprüchen.

Ein mit der Erfindung erreichbarer Vorteil besteht darin, dass einerseits sichergestellt ist, dass eine hinreichend gründliche Reinigung der mit der Zusatzkomponente in Berührung kommenden Teile oder Leitungen stattfindet. Andererseits wird nur so viel Reiniger in das Strömungsleitungssystem bzw. in die mit der Zusatzkomponente beaufschlagten Bereiche des Strömungsleitungssystems eingelassen oder zudosiert, wie es für die Reinigung bzw. Pflege dieser Leitungen oder Bauteile im Automaten gerade noch ausreichend ist. Dadurch wird erreicht, dass Reiniger nicht ungenutzt weggeschüttet wird, insgesamt hält der Reinigervorrat länger, wenn die Zusatzkomponente hinsichtlich Reinigung geringere Anforderungen aufweist.

Hierzu werden mittels der Steuereinrichtung die Pumpe und die Ventilvorrichtung für einen automatischen Reinigungsablauf in vorbestimmten zeitlichen Abständen aktiviert und deaktiviert, wobei
- die Steuereinrichtung die durchgeführte Nutzung des Getränkeautomaten erfasst und davon abhängig einen Verschmutzungsindex generiert und
- zumindest einer der elektrischen Verbraucher während des Pflegeablaufs mit einer vorgegebenen Leistung aktiviert, wobei die vorgegebene Leistung abhängig vom Verschmutzungsindex bestimmt wird. Bevorzugt wird auch die Heizeinrichtung in Abhängigkeit vom Verschmutzungsindex aktiviert und deaktiviert, während eines selbständigen Reinigungs,- oder Pflegeablaufs, um die Reinigungslösung bedarfsweise zu erwärmen oder zu erhitzen.

In einer bevorzugten Weiterbildung generiert die Steuereinrichtung den Verschmutzungsindex anhand einer kalkulierten oder prognostizierten Verschmutzung des Leitungssystems, wobei der Index einen kleinen Wert gegenüber einem Referenzwert aufweist, wenn eine geringe Verschmutzung erfasst wird und einen größeren Wert gegenüber dem Referenzwert aufweist, wenn eine stärkere Verschmutzung, als die geringe Verschmutzung erfasst wird. Das bedeutet, dass die jeweils zubereiteten Getränke hinsichtlich ihres Verschmutzungsverhaltens bewertet werden und diese Bewertung zur Erzeugung des Verschmutzungsindex einfließt. Wenn der Benutzer mehr starke Kaffeegetränke zieht, dann stellt sich eine stärkere Verfettung der Brühkammer und der nachgeschalteten Leitungen ein, als wenn der Benutzer nur kleine, und schwach dosierte Kaffeegetränke bezieht. Auch die Wasserqualität und die Umgebungstemperatur des Gerätes beeinflussen den Verschmutzungsindex, wobei das Maß für die Wasserqualität, bevorzugt das Maß für die sogenannte Wasserhärte oder Anteil an gelösten Mineralien im Wasser, vom Benutzer vorgegeben werden müssen.

In einer weiteren, insgesamt vorteilhaften Ausführung aktiviert die Steuereinrichtung die Intensität der Pflege / Reinigung variiert, in Abhängigkeit des generierten Verschmutzungsindex, wobei bei einem größeren Wert gegenüber dem Referenzwert die Steuereinrichtung die elektrischen Aktoren derart aktiviert oder steuert, dass sich eine intensive Pflege oder Reinigung durchgeführt wird und bei einem kleineren Wert gegenüber dem Referenzwert die Steuereinrichtung die elektrischen Aktoren derart aktiviert bzw. steuert, dass sich eine schonende oder geringe Pflege oder Reinigung durchgeführt wird. Im letztgenannten Fall kann es dabei vorkommen, dass einige Aktoren nicht aktiviert werden, weil sie zur Durchführung des sogenannten schwachen Pflegeablaufs nicht benötigt werden oder eine erhöhte Wirkung des mit Reiniger versetzten Wassers verhindert werden soll.

In einer zweckmäßigen Weiterbildung der Erfindung oder einer der vorgenannten Ausführungen wird die Reinigermenge oder Konzentration an Reiniger (C) in Abhängigkeit vom Verschmutzungsindex eingestellt und dem Strömungsleitungssystem zugeführt. Dazu aktiviert die Steuereinrichtung die zur Reinigerzuführung dienenden Aktoren, beispielsweise die Pumpe und/oder die Ventilanordnung, derart, dass sich die vorgegebene Menge oder Konzentration an Reinigungsmittel in das Strömungsleitungssystem eingelassen wird.

In einer zweckmäßigen Weiterbildung ist die Bewertung zur Zudosierung des Reingers so ausgebildet, dass die Reinigermenge oder Konzentration einen Referenzwert aufweist, wenn das Reinigungsmittel bzw. Reiniger eine Referenzsubstanz entspricht. Diese Bewertung und die daraus folgernde Aktion wird vorn der Steuereinrichtung durchgeführt, deren Mikrocontroller entsprechend programmiert ist.

Das Reinigungsmittel oder Reinigerfluid wird in größerer Menge oder Konzentration zudosiert bezogen auf den Referenzwert der Reinigermenge / Konzentration, wenn das Reinigungsmittel eine gegenüber der Referenzsubstanz geringer wirkende Substanz ist, bezogen auf die Wirkung der Referenzsubstanz.

Das Reinigungsmittel oder Reinigerfluid wird in geringerer Menge oder Konzentration zudosiert bezogen auf den Referenzwert der Reinigermenge / Konzentration, wenn das Reinigungsmittel eine gegenüber der Referenzsubstanz stärker wirkende Substanz ist, bezogen auf die Wirkung der Referenzsubstanz.

Insgesamt ist es zweckmäßig, dass die Dauer für jeden Reinigungsablauf im Bereich zwischen 2 und 40 Minuten beträgt und entsprechend von der Steuereinrichtung in Abhängigkeit des Verschmutzungsindex so eingestellt wird. Dabei ergibt sich eine kürzere Zeit, wenn eine geringwirkende Reinigung gefordert wird. Eine längere Zeit wird bei einem stärkeren Reinigungsbedarf eingestellt. Die Zeiteinstellung ist besonders einfach mittels der Steuereinrichtung bereitzustellen und kann stufig oder stufenlos bedarfsweise variiert werden.

Die Erfindung betrifft auch einen Getränkeautomaten zur Zubereitung von Aufgussgetränken, umfassend
- ein Strömungsleitungssystem mit einer Ventilanordnung,
- eine Reinigungsvorrichtung zur automatischen Durchführung eines Reinigungs- und/oder Pflegevorgangs, umfassend eine Vorratskartusche zur Bevorratung von Reinigungsmittel, und
- als elektrischen Verbraucher bzw. Aktoren eine elektrisch angetriebene Pumpe zur Zuführung des Reinigungsmittel oder einer Reinigungslösung von der Reinigungsvorrichtung in das Strömungsleitungssystem,
- eine Steuereinrichtung zur Aktivierung und Deaktivierung der Ventilanordnung und der Pumpe zur Durchführung der Getränkezubereitung und des Reinigungs- oder Pflegevorgangs,
- eine mit der Steuereinrichtung in Funktionsverbindung stehende Bedienvorrichtung zur Benutzereingabe einer Getränkeauswahl oder Parameterangaben bezüglich der Getränkezubereitung.

In einer insgesamt zweckmäßigen Weiterbildung ist die Steuereinrichtung dazu eingerichtet und programmiert, den Getränkeautomaten nach einem Verfahren wie vorstehend beschrieben, zu betreiben.

In einer insgesamt vorteilhaften Ausführung umfasst der Getränkeautomat ferner eine Zusatzeinrichtung zur Zuführung einer zusätzlichen Substanz, bevorzugt Milch, Zucker oder Sirup, zur Zugabe in das Aufgussgetränk, wobei die Steuereinrichtung dazu eingerichtet ist, den Index anhand der zugeführten zusätzlichen Substanz zu generieren. Hierbei wird das erhöhte Verschmutzungsverhalten der Zusatzsubstand entsprechend mitberücksichtigt und in den Verschmutzungsindex eingerechnet. Das bedeutet, dass nach einer vorgegebenen Anzahl von Getränkebezügen mit Zusatzsubstanz ein erhöhter Verschmutzungsindex erzeigt wird, der wiederrum eine intensiven, von der Maschine automatisch durchgeführten Reinigungsablauf verursacht.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer perspektivischen Frontansicht;
- Fig. 2:: schematisch das Strömungsleitungssystem und
- Fig. 3:: ein Diagramm für den Bewertungsablauf.

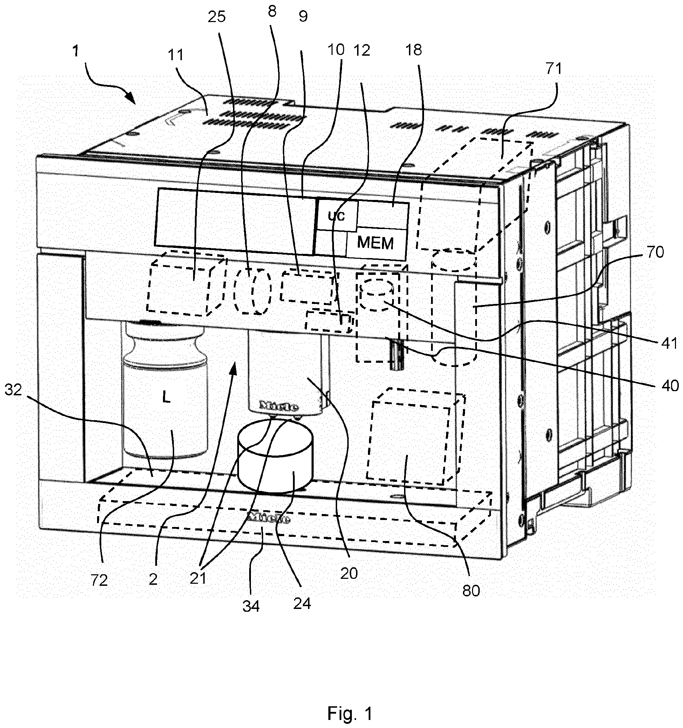

Die Fig.1 zeigt am Beispiel eines als Einbaugerät ausgebildeten Heißgetränkebereiter 1 mit allen relevanten Komponenten für die Zubereitung eines Heißgetränks in der Situation, in der ein Getränk zubereitet und in eine Tasse 24 ausgegeben werden kann. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 25 sowie die Möglichkeit, der Unterbringung des Strömungsleitungssystems 2. Ferner ist am Gerät 1 ein Vorratsbehälter 72 für Milch L angeschlossen bzw. mit dem Strömungsleitungssystem 2 fluidtechnisch gekoppelt. Im Frontbereich des Heißgetränkebereiter 1 verfügt dieser über einen höhenbeweglichen Auslass 20, in dem mehrere Entnahmeeinrichtungen, hier Auslassdüsen 21, 22, untergebracht sind. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21 in der Höhe verschiebbar angeordnet, so dass sie der Höhe eines auf der Abstellfläche oder Abtropfblech 32 abgestellten Trinkgefäßes 24 angepasst werden kann. Das Abtropfblech 32 ist vorzugsweise mit Öffnungen und/oder Schlitzen versehen, um Flüssigkeitsreste in einer unterhalb des Abtropfbleches 32 vorhandenen Auffangschale 34 abzuführen. Ferner umfasst der Heißgetränkebereiter 1 einen Tresterbehälter oder Abfallbehälter, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Aktoren bzw. Funktionsbaugruppen, wie Pumpe 8, Ventilanordnung 12, Heizeinrichtung 9 und Mahlwerk 70, soweit vorhanden, zu steuern, wie es für die Zubereitung des jeweils ausgewählten Getränkes notwendig ist. Die Steuereinrichtung 18 ist bevorzugt als Mikrocontroller uC mit einem zugeordneten Speicher MEM ausgeführt ist. Der Heißgetränkebereiter 1 umfasst ferner eine Bedienvorrichtung 10, die in dem gezeigten Beispiel einen Berührbildschirm zur Eingabe von Bedienhandlungen umfasst. Die Bedienvorrichtung 10 wird von einem Mikrocontroller uC gesteuert, wobei in dem gezeigten Beispiel die Gerätesteuerung 18 bzw. der Mikrocontroller uC der Gerätesteuerung 18 auch für die Steuerung und Funktion der Bedienvorrichtung 10 ausgebildet und/oder programmiert ist.

Der Heißgetränkebereiter 1 umfasst ferner eine Reinigungsvorrichtung 80, in der Reinigungsmittel R bevorratet wird, welches gesteuert durch die Steuereinrichtung 18 in Zusammenwirken mit der Ventilanordnung in das Strömungsleitungssystem 2 zudosiert oder eingelassen wird. Insbesondere wird zyklisch oder aufgrund einer Benutzereingabe der Reiniger bzw. die Reinigerlösung C in die milchführenden Leitungen, die sich innerhalb des Gerätes 1 befinden, eingelassen.

In Fig. 1 ist das Strömungsleitungssystem 2 mit den relevanten Funktionseinheiten und Aktoren zur Zubereitung von Heißgetränken als gestrichelt skizzierte Symbole dargestellt. Im Zubereitungsbetrieb des Gerätes 1 wird Wasser aus dem Vorratsbehälter 25 mittels der Pumpe 8 durch den Durchlauferhitzer 9 und mit Druck der Brühkammer 41 der Brüheinheit 40 zugeführt. In der Brühkammer 41 befindet sich während der Aufbrühphase Kaffeemehl, durch das das erhitzte Wasser mit Druck hindurchgedrückt wird. Dabei werden die löslichen Substanzen aus dem Kaffeemehl herausgelöst und als Getränk zur Entnahmeeinrichtung bzw. Düse 21 geführt und von dort aus in das Trinkgefäß 24 ausgegeben.

Die Pumpe 8 bzw. der Pumpenmotor M wird dabei unter Zuhilfenahme der Steuereinrichtung 18 mit unterschiedlicher elektrischer Energie aktiviert, um verschiedene Pumpleistungen einzustellen.

Die Ansteuerung der Ventilanordnung 12 erfolgt ebenfalls mittels der Steuereinrichtung 18. Die Steuereinrichtung 18 steuert auch die Aktivierung des Heizkörpers 9 zum Erhitzen des Wassers, und die Aktivierung der Brüheinheit 40 bzw. die Verfahrbewegung der Brühkammer 41 an.

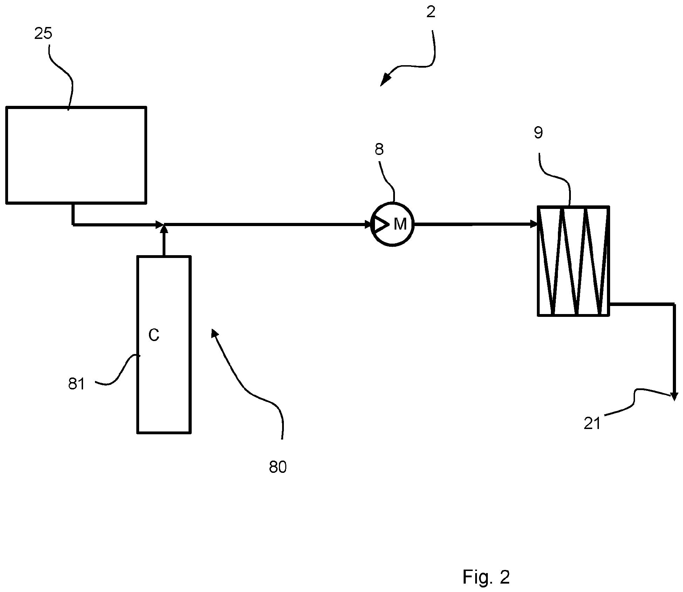

In Fig. 2 ist in einem vereinfachten Fluidschema ferner gezeigt, dass das Strömungsleitungssystem 2 mit Wasserbehälter 25, eine Reinigungsvorrichtung 80 umfasst bzw. diese im Strömungsleitungssystem 2 eingebunden ist. Gemäß der skizzierten Ausführung umfasst die Reinigungsvorrichtung 80 einen Vorratsbehälter 81 zur Bevorratung von Reinigungsmittel C oder Reinigerlösung in fester, gepresster Pulver- oder pastöser Form oder in flüssiger Form. Der Vorratsbehälters 81 umfasst einen Auslass 82, durch den das Reinigungsmittel C aus dem Vorratsbehälter 81 herausgesaugt und in das Strömungsleitungssystem 2 eingelassen wird. Die Reinigerlösung C wird mittels einer Pumpe, in dem gezeigten Beispiel mit der für die Getränkezubereitung vorgesehenen Pumpe 8 in ausgesuchte Bereiche des Strömungsleitungssystems 2 gepumpt bzw. geführt. Die Einleitung erfolgt dabei unter Zuhilfenahme der entsprechenden Ansteuerung der Ventilanordnung 12 (Fig. 1). Der Motor M der Pumpe 8 wird dabei mittels der Steuereinrichtung 18 so bestromt, dass die Pumpe 8 bzw. der Motor M in der Reinigungsphase mit unterschiedlichen Pumpenleistungen oder Durchflussgeschwindigkeiten betrieben wird. In der Steuervorrichtung 18, uC befindet sich der Programmcode mit der entsprechenden Verknüpfung, so dass der Reiniger C mit einer höheren Konzentration oder geringeren Konzentration eingelassen oder mengenmäßig mehr oder weniger hoch dosiert wird. Zusätzlich kann die Heizeinrichtung 9 während des Reinigungsablaufs aktiviert werden, damit eine warme oder heiße Reinigungslösung erzeugt und den nachfolgenden Leitungen und Komponenten, wie Brühkammer 41 und Milchschäumer zugeführt werden kann. Mit dieser Erhitzung kann die Wirkung der automatischen Reinigung erhöht oder verstärkt werden.

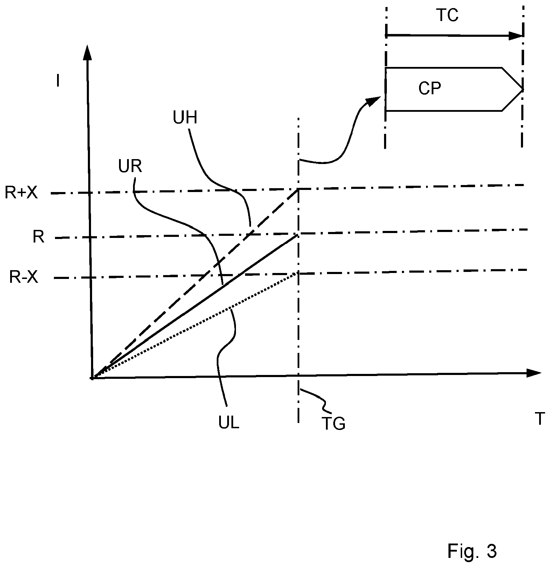

In Fig. 3 ist in einem Diagramm skizziert, wie der Verschmutzungsindex I gebildet wird. Die X-Achse gibt die Dauer der Betriebsstunden T oder die Anzahl der Getränkebezüge an, wobei die Y-Achse den Verschmutzungsindex I angibt. Hierbei sind drei verschiedene Benutzungsarten skizziert. Die Kennlinie UR zeigt, dass Getränke bezogen werden, die der sogenannten Referenzverschmutzung entsprechen. Nach einer vorgegeben Zeit TG oder Anzahl wird der automatische Reinigungsablauf oder Reinigungszyklus gestartet. Zu diesem Zeitpunkt wird der Verschmutzungsindex I bewertet, und daraus die entsprechende Reinigungsintensität eingestellt. Die mittlere Kennlinie UR skizziert die Erhöhung des Verschmutzungsindex I, wenn Getränke bezogen werden, die eine Referenzverschmutzung im Leitungssystem 2 verursachen. Damit erreicht der Verschmutzungsindex I zum vorgegebenen Zeitpunkt TG den Referenzwert R. Der automatische Reinigungsablauf wird dann mit einer mittleren Intensität durchgeführt.

Die Kennlinie UL zeigt, dass Getränke bezogen werden, die eine geringere Verschmutzung gegenüber der Referenzverschmutzung verursachen. Nach einer vorgegeben Zeit TG oder Anzahl wird der automatische Reinigungsablauf CP oder Reinigungszyklus gestartet. Zu diesem Zeitpunkt wird der Verschmutzungsindex I bewertet, und daraus die entsprechende Reinigungsintensität eingestellt. Die gepunktete Kennlinie UL skizziert die Erhöhung des Verschmutzungsindex I, wenn Getränke bezogen werden, die die geringe Verschmutzung im Leitungssystem 2 verursachen. Damit erreicht der Verschmutzungsindex I zum vorgegebenen Zeitpunkt TG den Wert R-X, der kleiner ist, als der Referenzwert R. Der automatische Reinigungsablauf wird dann mit einer geringen Intensität durchgeführt, gegenüber einem Referenzablauf.

Die Kennlinie UH zeigt, dass Getränke bezogen werden, die eine hohe Verschmutzung gegenüber der Referenzverschmutzung verursachen, beispielsweise Milchgetränke oder Kaffeegetränke mit Milchschaum oder besonders starke Kaffeegetränke, bei denen pro Getränk eine erhöhte Kaffeemenge verwendet wird. Nach einer vorgegeben Zeit TG oder Anzahl wird der automatische Reinigungsablauf oder Reinigungszyklus gestartet. Zu diesem Zeitpunkt wird der Verschmutzungsindex I bewertet, und daraus die entsprechende Reinigungsintensität eingestellt. Die gestrichelte Kennlinie UH skizziert die Erhöhung des Verschmutzungsindex I, wenn Getränke bezogen werden, die die große Verschmutzung im Leitungssystem 2 verursachen. Damit erreicht der Verschmutzungsindex I zum vorgegebenen Zeitpunkt TG den Wert R+X, der größer ist, als der Referenzwert R. Der automatische Reinigungsablauf wird dann mit einer hohen Intensität durchgeführt, gegenüber einem Referenzablauf.

## Patentansprüche

1. Verfahren zum Betreiben eines Getränkeautomaten (1) zur Zubereitung von Aufgussgetränken, umfassend
- ein Strömungsleitungssystem (2) mit einer Ventilanordnung (12);
- eine Reinigungsvorrichtung (80) zur automatischen Durchführung eines Reinigungs- und/oder Pflegevorgangs (CP), umfassend eine Vorratskartusche (81) zur Bevorratung von Reinigungsmittel (C) und
- als elektrischen Verbraucher eine elektrisch angetriebene Pumpe (8, M) zur Zuführung des Reinigungsmittel (C) oder einer Reinigungslösung von der Reinigungsvorrichtung (80) in das Strömungsleitungssystem (2);
- eine Steuereinrichtung (18), wobei mittels der Steuereinrichtung (18, uC) die Aktivierung und Deaktivierung der Ventilanordnung (12) und der Pumpe (8, M) zur Durchführung der Getränkezubereitung und des Reinigungs- oder Pflegevorgangs (CP) erfolgt,
**dadurch gekennzeichnet,**
**dass** mittels der Steuereinrichtung (18, uC) die Pumpe (8, M) und die Ventilvorrichtung (12) für einen automatischen Reinigungsablauf (CP) in vorbestimmten zeitlichen Abständen (TG) aktiviert und deaktiviert werden, wobei
- die Steuereinrichtung (18, uC) die durchgeführte Nutzung des Getränkeautomaten (1) erfasst und davon abhängig einen Verschmutzungsindex (I) generiert und
- zumindest einen der elektrischen Verbraucher (8, M, 9, 12) während des Pflegeablaufs (CP) mit einer vorgegebenen Leistung aktiviert, wobei die vorgegebene Leistung abhängig vom Verschmutzungsindex (I) bestimmt wird.

2. Verfahren nach Anspruch 1,
**dadurch gekennzeichnet,**
**dass** die Steuereinrichtung (18, uC) den Verschmutzungsindex (I) anhand einer kalkulierten oder prognostizierten Verschmutzung des Leitungssystems (2) generiert, wobei der Index (I) einen kleinen Wert (R-X) gegenüber einem Referenzwert (R) aufweist, wenn eine geringe Verschmutzung erfasst wird und einen größeren Wert (R+X) gegenüber dem Referenzwert (R) aufweist, wenn eine stärkere Verschmutzung, als die geringe Verschmutzung (R-X) erfasst wird.

3. Verfahren nach Anspruch 2,
**dadurch gekennzeichnet,**
**dass** die Steuereinrichtung (18, uC) die Intensität der Pflege / Reinigung variiert, in Abhängigkeit des generierten Verschmutzungsindex (I), wobei bei einem größeren Wert (R+X) gegenüber dem Referenzwert (R) die Steuereinrichtung (18, uC) die elektrischen Aktoren (8, M, 9, 12) derart aktiviert bzw. steuert, dass sich eine intensive Pflege oder Reinigung durchgeführt wird und bei einem kleineren Wert (R-X) gegenüber dem Referenzwert (R) die Steuereinrichtung (18) die elektrischen Aktoren (8, M, 9, 12) derart aktiviert bzw. steuert, dass sich eine schonende oder geringe Pflege oder Reinigung durchgeführt wird.

4. Verfahren nach einem der Ansprüche 1 bis 3,
**dadurch gekennzeichnet,**
**dass** die Reinigermenge oder Konzentration an Reiniger (C) in Abhängigkeit vom Verschmutzungsindex (I) eingestellt und dem Strömungsleitungssystem (2) zugeführt wird.

5. Verfahren nach Anspruch 4,
**dadurch gekennzeichnet,**
**dass** die Reinigermenge oder Konzentration einen Referenzwert aufweist, wenn das verwendete Reinigungsmittel einer Referenzsubstanz entspricht.

6. Verfahren nach Anspruch 5,
**dadurch gekennzeichnet,**
**dass** die Reinigermenge oder Konzentration größer / höher ist als der Referenzwert der Reinigermenge / Konzentration, wenn das Reinigungsmittel (C) eine gegenüber der Referenzsubstanz geringer wirkende Substanz ist.

7. Verfahren nach Anspruch 5,
**dadurch gekennzeichnet,**
**dass** die Reinigermenge oder Konzentration geringer / niedriger ist, als der Referenzwert der Reinigermenge oder Konzentration, wenn das Reinigungsmittel (C) eine gegenüber der Referenzsubstanz stärker wirkende Substanz ist.

8. Verfahren nach einem der Ansprüche 1 bis 7,
**dadurch gekennzeichnet,**
**dass** die Dauer (TC) für jeden Reinigungsablauf (CP) im Bereich zwischen 2 und 40 Minuten beträgt und entsprechend von der Steuereinrichtung (18, uC) in Abhängigkeit des Verschmutzungsindex (I) auf eine entsprechende Zeit (TC) eingestellt wird.

9. Getränkeautomat (1) zur Zubereitung von Aufgussgetränken, umfassend
- ein Strömungsleitungssystem (2) mit einer Ventilanordnung (12),
- eine Reinigungsvorrichtung (80) zur automatischen Durchführung eines Reinigungs- und/oder Pflegevorgangs (CP), umfassend eine Vorratskartusche (81) zur Bevorratung von Reinigungsmittel (C), und
- als elektrischen Verbraucher eine elektrisch angetriebene Pumpe (8, M) zur Zuführung des Reinigungsmittel (C) oder einer Reinigungslösung von der Reinigungsvorrichtung (80) in das Strömungsleitungssystem (2),
- eine Steuereinrichtung (18) zur Aktivierung und Deaktivierung der Ventilanordnung (12) und der Pumpe (8, M) zur Durchführung der Getränkezubereitung und des Reinigungs- oder Pflegevorgangs (CP),
- eine mit der Steuereinrichtung (18, uC) in Funktionsverbindung stehende Bedienvorrichtung (10) zur Benutzereingabe einer Getränkeauswahl oder Parameterangeben bezüglich der Getränkezubereitung,
- **dadurch gekennzeichnet,**
**dass** die Steuereinrichtung (18, uC) dazu eingerichtet und programmiert ist, die Pumpe (8, M) und die Ventilvorrichtung (12) für einen automatischen Reinigungsablauf (CP) in vorbestimmten zeitlichen Abständen (TG) zu aktivieren und zu deaktivieren, wobei
- die Steuereinrichtung (18, uC) dazu eingerichtet ist, die durchgeführte Nutzung des Getränkeautomaten (1) zu erfassen und davon abhängig einen Verschmutzungsindex (I) zu generieren und
- zumindest einen der elektrischen Verbraucher (8, M, 9, 12) während des Pflegeablaufs (CP) mit einer vorgegebenen Leistung zu aktivieren, und die vorgegebene Leistung abhängig vom Verschmutzungsindex (I) zu bestimmen bzw. einzustellen.

10. Getränkeautomat (1) nach Anspruch 9,
**dadurch gekennzeichnet,**
**dass** die Steuereinrichtung (18, uC) dazu eingerichtet und programmiert ist, den Getränkeautomaten (1) nach einem Verfahren gemäß einem der Ansprüche 1 bis 8 zu betreiben.

11. Getränkeautomat (1) nach Anspruch 9 oder 10, ferner umfassend eine Zusatzeinrichtung (72) zur Zuführung einer zusätzlichen Substanz (L) zur Zugabe in das Aufgussgetränk, wobei die Steuereinrichtung (18, uC) dazu eingerichtet ist, den Index (I) anhand der zugeführten zusätzlichen Substanz (L) zu generieren oder anzupassen.

## Claims

1. Method for operating a beverage machine (1) for preparing infusion beverages, comprising
- a flow line system (2) comprising a valve arrangement (12);
- a cleaning device (80) for automatically carrying out a cleaning and/or care process (CP), comprising a storage cartridge (81) for storing cleaning agent (C), and
- as an electrical consumer, an electrically driven pump (8, M) for supplying the cleaning agent (C) or a cleaning solution from the cleaning device (80) into the flow line system (2);
- a control device (18), the valve arrangement (12) and the pump (8, M) being activated and deactivated by means of the control device (18, uC) in order to carry out the beverage preparation and the cleaning or care process (CP),
**characterised in that** the pump (8, M) and the valve device (12) are activated and deactivated, by means of the control device (18, uC), at predetermined time intervals (TG) for an automatic cleaning sequence (CP),
- the control device (18, uC) detecting the use made of the beverage machine (1) and, on the basis thereof, generating a contamination index (I) and
- activating at least one of the electrical consumers (8, M, 9, 12) at a predefined power during the care sequence (CP), the predefined power being determined depending on the contamination index (I).

2. Method according to claim 1,
**characterised in that**
the control device (18, uC) generates the contamination index (I) on the basis of a calculated or predicted contamination of the line system (2), the index (I) having a small value (R-X) compared to a reference value (R) if a low level of contamination is detected and having a higher value (R+X) compared to the reference value (R) if a higher level of contamination than the low level of contamination (R-X) is detected.

3. Method according to claim 2,
**characterised in that**
the control device (18, uC) varies the intensity of the care/cleaning depending on the generated contamination index (I), the control device (18, uC) activating or controlling the electrical actuators (8, M, 9, 12) in the case of a higher value (R+X) compared to the reference value (R) in such a way that intensive care or cleaning is carried out and the control device (18) activating or controlling the electrical actuators (8, M, 9, 12) in the case of a lower value (R-X) than the reference value (R) in such a way that gentle or minor care or cleaning is carried out.

4. Method according to any of claims 1 to 3,
**characterised in that**
the amount of cleaner or concentration of cleaner (C) is set depending on the contamination index (I) and supplied to the flow line system (2).

5. Method according to claim 4,
**characterised in that**
the cleaner amount or concentration has a reference value if the cleaner used corresponds to a reference substance.

6. Method according to claim 5,
**characterised in that**
the cleaner amount or concentration is greater/higher than the reference value of the cleaner amount/concentration if the cleaning agent (C) is a substance that has a lesser effect than the reference substance.

7. Method according to claim 5,
**characterised in that**
the cleaner amount or concentration is less/lower than the reference value of the cleaner amount or concentration if the cleaning agent (C) is a substance that has a greater effect than the reference substance.

8. Method according to any of claims 1 to 7,
**characterised in that**
the duration (TC) for each cleaning sequence (CP) is in the range between 2 and 40 minutes and is accordingly set to a corresponding time (TC) by the control device (18, uC) depending on the contamination index (I).

9. Beverage machine (1) for preparing infusion beverages, comprising
- a flow line system (2) comprising a valve arrangement (12),
- a cleaning device (80) for automatically carrying out a cleaning and/or care process (CP), comprising a storage cartridge (81) for storing cleaning agent (C), and
- as an electrical consumer, an electrically driven pump (8, M) for supplying the cleaning agent (C) or a cleaning solution from the cleaning device (80) into the flow line system (2),
- a control device (18) for activating and deactivating the valve arrangement (12) and the pump (8, M) in order to carry out the beverage preparation and the cleaning or care process (CP),
- an operating device (10) which is functionally connected to the control device (18, uC) for user input of a beverage selection or parameters relating to the beverage preparation,
- **characterised in that**
the control device (18, uC) is configured and programmed to activate and deactivate the pump (8, M) and the valve device (12) at predetermined time intervals (TG) for an automatic cleaning sequence (CP),
- the control device (18, uC) being configured to detect the use made of the beverage machine (1) and, on the basis thereof, generate a contamination index (I) and
- to activate at least one of the electrical consumers (8, M, 9, 12) at a predefined power during the care sequence (CP), and to determine or set the predefined power depending on the contamination index (I).

10. Beverage machine (1) according to claim 9,
**characterised in that**
the control device (18, uC) is configured and programmed to operate the beverage machine (1) using a method according to any of claims 1 to 8.

11. Beverage machine (1) according to either claim 9 or claim 10, further comprising an additional means (72) for supplying an additional substance (L) to be added into the infusion beverage, the control device (18, uC) being configured to generate or adapt the index (I) depending on the supplied additional substance (L).

## Revendications

1. Procédé destiné à faire fonctionner un distributeur de boissons (1) pour préparer des boissons infusées, comprenant
- un système de conduite d'écoulement (2) comportant un agencement de vannes (12) ;
- un dispositif de nettoyage (80) pour effectuer automatiquement un processus de nettoyage et/ou d'entretien (CP), comprenant une cartouche de stockage (81) pour stocker l'agent de nettoyage (C) et
- en tant que consommateur électrique, une pompe (8, M) à entraînement électrique pour introduire l'agent de nettoyage (C) ou une solution de nettoyage du dispositif de nettoyage (80) dans le système de conduite d'écoulement (2) ;
- un dispositif de commande (18), l'activation et la désactivation de l'agencement de vannes (12) et de la pompe (8, M) pour effectuer la préparation de boisson et le processus de nettoyage ou d'entretien (CP) étant réalisées au moyen du dispositif de commande (18, uC),
**caractérisé en ce**
**qu'**au moyen du dispositif de commande (18, uC), la pompe (8, M) et le dispositif de vannes (12) sont activés et désactivés pour une opération de nettoyage (CP) automatique à des intervalles de temps prédéterminés (TG),
- le dispositif de commande (18, uC) détectant l'utilisation effectuée du distributeur de boissons (1) et, en fonction de celle-ci, générant un indice de salissure (I) et
- activant au moins un des consommateurs électriques (8, M, 9, 12) pendant l'opération d'entretien (CP) avec une puissance spécifiée, la puissance spécifiée étant déterminée en fonction de l'indice de salissure (I).

2. Procédé selon la revendication 1,
**caractérisé en ce**
**que** le dispositif de commande (18, uC) génère l'indice de salissure (I) à l'aide d'une salissure calculée ou prédite du système de conduite (2), l'indice (I) présentant une petite valeur (R - X) par rapport à une valeur de référence (R) lorsqu'une faible salissure est détecté et présentant une valeur plus élevée (R + X) par rapport à la valeur de référence (R) lorsqu'une salissure plus importante que la faible salissure (R - X) est détectée.

3. Procédé selon la revendication 2,
**caractérisé en ce**
**que** le dispositif de commande (18, uC) fait varier l'intensité de l'entretien/nettoyage, en fonction de l'indice de salissure (I) généré, le dispositif de commande (18, uC) activant ou commandant les actionneurs électriques (8, M, 9, 12) lorsqu'une valeur (R + X) est supérieure par rapport à la valeur de référence (R), de telle sorte qu'un entretien ou un nettoyage intensif est effectué, et, lorsqu'une valeur (R - X) est inférieure par rapport à la valeur de référence (R), le dispositif de commande (18) active ou commande les actionneurs électriques (8, M, 9, 12) de telle sorte qu'un entretien ou un nettoyage doux ou faible est effectué.

4. Procédé selon l'une des revendications 1 à 3,
**caractérisé en ce**
**que** la quantité de produit nettoyant ou la concentration de produit nettoyant (C) est réglée en fonction de l'indice de salissure (I) et introduite par le système de conduite d'écoulement (2).

5. Procédé selon la revendication 4,
**caractérisé en ce**
**que** la quantité ou la concentration de produit nettoyant présente une valeur de référence lorsque l'agent de nettoyage utilisé correspond à une substance de référence.

6. Procédé selon la revendication 5,
**caractérisé en ce**
**que** la quantité ou la concentration de produit nettoyant est supérieure à/plus élevée que la valeur de référence de la quantité/concentration de produit nettoyant lorsque l'agent de nettoyage (C) est une substance à action plus faible que la substance de référence.

7. Procédé selon la revendication 5,
**caractérisé en ce**
**que** la quantité ou la concentration de produit nettoyant est plus faible que/inférieure à la valeur de référence de la quantité ou de la concentration de produit nettoyant lorsque l'agent de nettoyage (C) est une substance à action plus forte que la substance de référence.

8. Procédé selon l'une des revendications 1 à 7,
**caractérisé en ce**
**que** la durée (TC) pour chaque opération de nettoyage (CP) est comprise dans la plage allant de 2 à 40 minutes et est réglée par conséquent sur un temps (TC) correspondant par le dispositif de commande (18, uC) en fonction de l'indice de salissure (I).

9. Distributeur de boissons (1) destiné à préparer des boissons infusées, comprenant
- un système de conduite d'écoulement (2) comportant un agencement de vannes (12),
- un dispositif de nettoyage (80) pour effectuer automatiquement un processus de nettoyage et/ou d'entretien (CP), comprenant une cartouche de stockage (81) pour stocker l'agent de nettoyage (C), et
- en tant que consommateur électrique, une pompe (8, M) à entraînement électrique pour introduire l'agent de nettoyage (C) ou une solution de nettoyage du dispositif de nettoyage (80) dans le système de conduite d'écoulement (2),
- un dispositif de commande (18) pour activer et désactiver l'agencement de vannes (12) et la pompe (8, M) pour effectuer la préparation de boisson et le processus de nettoyage ou d'entretien (CP),
- un dispositif d'actionnement (10) qui est fonctionnellement connecté au dispositif de commande (18, uC) pour permettre une saisie par l'utilisateur d'une sélection de boissons ou de spécifications de paramètres relatives à la préparation de boissons, **caractérisé en ce**
**que** le dispositif de commande (18, uC) est configuré et programmé pour activer et désactiver la pompe (8, M) et le dispositif de vannes (12) pour une opération de nettoyage (CP) automatique à des intervalles de temps prédéterminés (TG),
- le dispositif de commande (18, uC) est configuré pour enregistrer l'utilisation réalisée du distributeur de boissons (1) et, en fonction de celle-ci, pour générer un indice de salissure (I) et
- activer au moins un des consommateurs électriques (8, M, 9, 12) pendant l'opération d'entretien (CP) avec une puissance spécifiée, et déterminer ou régler la puissance spécifiée en fonction de l'indice de salissure (I).

10. Distributeur de boissons (1) selon la revendication 9,
**caractérisé en ce**
**que** le dispositif de commande (18, uC) est configuré et programmé pour faire fonctionner le distributeur de boissons (1) selon un procédé selon l'une des revendications 1 à 8.

11. Distributeur de boissons (1) selon la revendication 9 ou 10, comprenant en outre un dispositif supplémentaire (72) pour introduire une substance supplémentaire (L) à ajouter dans la boisson infusée, le dispositif de commande (18, uC) étant configuré pour générer ou adapter l'indice (I) sur la base de la substance supplémentaire (L) ajoutée.
